# EUROPEAN PATENT APPLICATION

(11) **EP 3 832 488 A2**
(43) Date of publication of application: **09.06.2021**
(21) Application number: 21163766.5
(22) Date of filing: 19.03.2021
(51) Int. Cl.: G06F 16/36

(54) **METHOD AND APPARATUS FOR GENERATING EVENT THEME, DEVICE AND STORAGE MEDIUM**

(30) Priority: 20.03.2020 CN 202010203397
(71) Applicant: BEIJING BAIDU NETCOM SCIENCE AND TECHNOLOGY CO. LTD., 100085 Beijing (CN)
(72) Inventor: Han, Cuiyun, Beijing, 100085 (CN); Chen, Yuguang, Beijing, 100085 (CN); Huang, Jiayan, Beijing, 100085 (CN); Li, Fayuan, Beijing, 100085 (CN); Liu, Yuanzhen, Beijing, 100085 (CN); Pan, Lu, Beijing, 100085 (CN)
(74) Representative: Maiwald Patent- und Rechtsanwaltsgesellschaft mbH

(57) **Abstract**

The present disclosure provides a method for generating an event theme, belonging to a field of knowledge graph technologies and a field of deep learning technologies. Pieces of event information in an associated relation is obtained and entity information and an event type of each piece of event information are obtained (S110). Target event information having representative attributes is obtained (S120) from the pieces of event information. A theme template matching the event type of the target event information is selected (S130) from a theme template collection. The entity information and the event type of the target event information are added (S140) into the theme template to generate a theme of the pieces of event information.

## Description

### TECHNICAL FIELD

The present disclosure relates to a field of computer technologies, specifically a field of knowledge graph technologies and a field of deep learning technologies.

### BACKGROUND

With development of Internet and computer technologies, massive news information could be pushed to users in time. In order to facilitate organization of news information and to provide users with good reading experience, generally, news information describing the same event is aggregated, and then different events of the same theme are aggregated to facilitate users to select themes or events of interest for reading.

In the related art, the themes of events are mostly sorted manually, that is, manually reading each event and news information under each event, and constructing a theme as the theme of each event. Certainly, the method of manually generating event topics requires a lot of manpower and has low time effectiveness.

### SUMMARY

The embodiments of this disclosure provide a method for generating an event theme, an apparatus for generating an event theme, an electronic device and a storage medium, to automatically generate a plurality of event themes.

In a first aspect, embodiments of the present disclosure provide a method for generating an event theme, the method includes: obtaining a plurality of pieces of event information in an associated relation, and obtaining entity information and an event type of each piece of event information; obtaining target event information having representative attributes from the pieces of event information; selecting a theme template matching the event type of the target event information from a theme template collection; and adding the entity information and the event type of the target event information into the theme template to generate a theme of the pieces of event information.

With embodiments of the present disclosure, the data needed to generate the theme is obtained by obtaining a plurality of pieces of event information in an associated relation, and obtaining entity information and an event type of each piece of event information. The generality of the theme on the plurality of pieces of event information is improved by obtaining target event information having representative attributes from the pieces of event information and generating a theme based on the target event information. One theme template matches one event type, and by adopting different theme templates for different event types, the selected theme is more in line with people's language logic. Through selecting a theme template matching the event type of the target event information from a theme template collection, and adding the entity information and the event type of the target event information into the theme template to generate a theme of the pieces of event information, the efficiency and automation of theme generation is improved.

Optionally, obtaining the plurality of pieces of event information in the associated relation, and obtaining the entity information and the event type of each piece of event information includes: extracting a subgraph from an event knowledge graph, the subgraph including event nodes in an association relation, in which each event node stores an identifier of the event information, and an attribute of each event node includes the entity information and the event type of the event information.

In an optional implementation of the present disclosure, the entity information and the event type of each piece of event information are pre-stored in the event knowledge graph. By directly extracting structured data from the event knowledge graph, the data extraction rate is increased, thereby improving the timeliness of theme generation.

Optionally, extracting a subgraph from an event knowledge graph includes: extracting a candidate subgraph from the event knowledge graph, the candidate subgraph including event nodes in an association relation; and extracting the subgraph having a single-chain structure from the candidate subgraph when the candidate subgraph includes an event node having an outdegree equal to or greater than 2 or an indegree equal to or greater than 2.

In an optional implementation of the present disclosure, there may be event nodes having an outdegree equal to or greater than 2 or an indegree equal to or greater than 2 in the candidate subgraph, if those event nodes do not belong to one topic, then the theme could not be generated. Therefore, the subgraph having a single-chain structure is extracted from the candidate subgraph, thereby ensuring that a theme is generated for events belonging to the same topic to improve the intelligence of the theme and users' reading experience.

Optionally, extracting the subgraph from the event knowledge graph includes: determining subgraphs to be extracted from the event knowledge graph; and extracting the subgraph when the number of nodes in the subgraph is equal to or greater than a preset number, and/or a total popularity degree of the event nodes included in the subgraph is equal to or greater than a preset popularity degree.

In an optional implementation of the present disclosure, the subgraph is extracted when the number of nodes in the subgraph is equal to or greater than a preset number, and/or a total popularity degree of the event nodes included in the subgraph is equal to or greater than a preset popularity degree.

Optionally, before extracting the subgraph from the event knowledge graph, the method further includes: obtaining the pieces of event information in the associated relation, each piece of event information comprising an event title and report content; recognizing named entities in the event title of each piece of event information to obtain the entity information of the event information; classifying the report content of each piece of event information to obtain the event type of the event information; and constructing an event node with the event information, the entity information and the event type of the event information, and constructing an edge between event nodes based on the association relation between corresponding event information to generate the event knowledge graph.

In an optional implementation of the present disclosure, the process of generating the event knowledge graph is provided, and entity information, event types and association relations are provided in advance for generating themes.

Optionally, adding the entity information and the event type of the target event information into the theme template to generate the theme of the pieces of event information includes: adding the entity information of the target event information into a subject position of the theme template, and adding the event type of the target event information into a predicate position of the theme template to generate the theme of the pieces of event information.

In an optional implementation of the present disclosure, a method for applying the theme template is provided, and the theme is directly generated by directly adding the entity information and the event type into preset locations of the theme template to generate the theme.

Optionally, obtaining the target event information having representative attributes from the pieces of event information includes: sorting the pieces of event information based on an occurrence time sequence of the pieces of event information; and selecting a first piece or a last piece from pieces of sorted event information as the target event information.

In an optional implementation of the present disclosure, the first piece is the cause of a plurality of events, and the last piece is the final result of a plurality of events, both events have representative attributes of a plurality of events. Then the event information of the first piece or last piece is more representative for a plurality of event information.

Optionally, before sorting the pieces of event information based on the occurrence time sequence of the pieces of event information, the method further includes: calculating a similarity between every two pieces of event information; and removing one of two pieces of event information, when the similarity between the two pieces of event information exceeds a preset similarity threshold.

In an optional implementation of the present disclosure, by removing similar event information, event redundancy is avoided. Moreover, by removing redundant events and sorting events, the accuracy of the target event information is improved.

Optionally, before adding the entity information and the event type of the target event information into the theme template to generate the theme of the pieces of event information, the method includes: counting the number of pieces of different entity information and the number of different event types of the pieces of event information; determining a first theme modifier word for each piece of different entity information when the number of pieces of the different entity information exceeds a preset threshold; determining a second theme modifier word for each different event type, when the number of different event types exceeds the preset threshold. Adding the entity information and the event type of the target event information into the theme template to generate the theme of the pieces of event information includes: adding the entity information, the event type, the first theme modifier word and the second theme modifier word of the target event information into the theme template to generate the theme of the pieces of event information.

In an optional implementation of the present disclosure, if the number of different entity information or the number of different event types is large, the target event information may not sufficiently represent all event information. Therefore, adding the theme modification vocabulary after adding the entity information and the event types enriches the theme content and improves the theme's generality of a plurality of events.

In a second aspect, embodiments of the present disclosure provide an apparatus for generating an event theme includes: an obtaining module, a screening module, a selecting module and an adding module.

The obtaining module is configured to obtain a plurality of pieces of event information in an associated relation, and obtain entity information and an event type of each piece of event information.

The screening module is configured to obtain target event information having representative attributes from the pieces of event information.

The selecting module is configured to select a theme template matching the event type of the target event information from a theme template collection.

The adding module is configured to add the entity information and the event type of the target event information into the theme template to generate a theme of the pieces of event information.

In a third aspect, embodiments of the present disclosure provide an electronic device. The electronic device includes: at least one processor; and a memory communicatively connected with the at least one processor; wherein, the memory stores instructions executable by the at least one processor, and when the instructions are executed by the at least one processor, the at least one processor is caused to implement the method for generating an event theme according to the first aspect of the embodiments of the disclosure.

In a fourth aspect, embodiments of the present disclosure provide a non-transitory computer-readable storage medium having computer instructions stored thereon, in which the computer instructions are used to cause the computer to implement the method for generating an event theme according to the first aspect of the embodiments of the disclosure.

Additional effects of the above-mentioned optional manners are described below in combination with specific embodiments.

### BRIEF DESCRIPTION OF THE DRAWINGS

The drawings are used to better understand the solution and do not constitute a limitation to the disclosure, in which:
FIG. 1 is a flowchart of a method for generating an event theme according to some embodiments of the present disclosure.
FIG. 2 is a flowchart of a method for generating an event theme according to some embodiments of the present disclosure.
FIG. 3 is a flowchart of a method for generating an event theme according to some embodiments of the present disclosure.
FIG. 4 is a flowchart of a method for generating an event theme according to some embodiments of the present disclosure.
FIG. 5 is a structural diagram of an apparatus for generating an event theme according to some embodiments of the present disclosure.
FIG. 6 is a block diagram of an electronic device used to implement the method for generating an event theme according to some embodiments of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

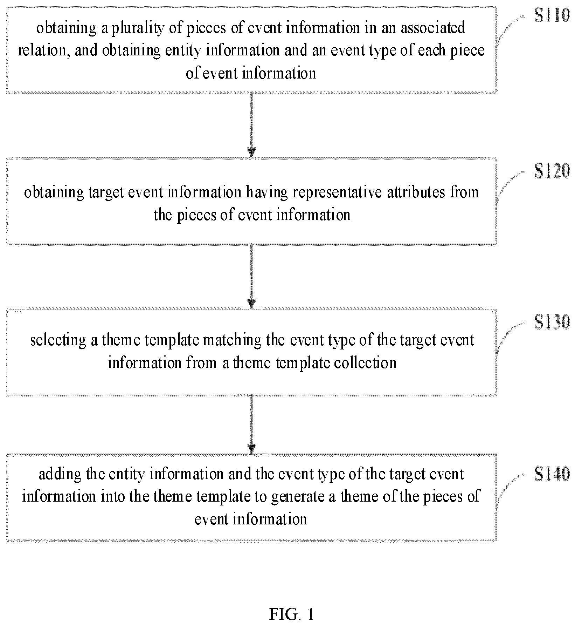

FIG. 1 is a flowchart illustrating a method for generating an event theme according to some embodiments of the present disclosure. Embodiments of the present disclosure are applicable to the case of automatically generating a theme for a plurality of events. The method is executed by an apparatus for generating an event theme, which is implemented by software and/or hardware, and is specifically integrated in an electronic device with certain data computing capabilities.

The method for generating an event theme illustrated in FIG. 1 may include the following.

At block S110, a plurality of pieces of event information in an associated relation are obtained, and entity information and an event type of each event information is obtained.

Pieces of event information in an associated relation refers to that pieces of event information having an associated relation or are associated. The relation between events may include order of succession, and causality. The associated relation in embodiments may be the order of succession. That is, the occurrence time of events is sequential, and an event occurring later is continuation or fermentation of a previously occurred event.

The event information includes an event title and report content. In detail, named entities in the event title of each piece of event information, such as names, are recognized to obtain the entity information of the event information. The report content of each piece of event information is classified for example into divorce type, meeting type and trade type, to obtain the event type of the event information. In classifying events based on the report content, keywords, sentences, and paragraphs in the report content may be used to identify event trigger words using deep learning, and further realize event classification. The event trigger words are the words that directly triggers the event. For example, in the sentence "my high-school classmate got married a month ago", the trigger word may be "got married", and the event type is marriage type.

Certainly, the event information also includes event occurrence information, such as the occurrence time and occurrence location of the event.

At block S 120, target event information having representative attributes is obtained from the pieces of event information.

The target event information may be selected from the pieces of event information. Representative attributes refer to attributes that can represent a plurality of pieces of event information. In some embodiments, officially released event information may be used as the target event information having representative attributes.

At block S130, a theme template matching the event type of the target event information is selected from a theme template collection.

At block S140, the entity information and the event type of the target event information are added into the theme template to generate a theme of the pieces of event information.

The theme template collection includes various theme templates corresponding to event types. The theme template includes subject positions to be filled with entity information and predicate positions to be filled with event types. Certainly, the theme template may also include predicative positions to be filled with the event occurrence information. For example, the template of the meeting type may be the main conference content where (subject position) (predicate position) at (predicative position), and the template of the divorce type may be the disturbance where (subject position) (predicate position).

The entity information of the target event information is filled in the subject position of the theme template, and the event type of the target event information is filled in the predicate position of the theme template to generate a theme of pieces of events. Further, the event occurrence information of the target event information is filled in the predicative position of the theme template. For example, the entity information is Zhang and Wu, and the event type is divorce, such that the theme template filled with the above information is the disturbance where Zhang and Wu got divorced.

In some embodiments of the present disclosure, the data for generating the theme is obtained by obtaining the entity information and the event types of pieces of event information in an associated relation. The generality of the theme over the plurality of pieces of event information is improved by obtaining the target event information having representative attributes from the pieces of event information and generating the theme based on the target event information. In embodiments, the theme template matches the event type one by one, and by adopting different theme templates for different event types, the selected theme is in line with people's language logic. Through a method of directly applying a template, that is, the theme is generate by selecting a theme template matching the event type from the theme template collection and adding the entity information and the event type into the theme template, the efficiency and automation of theme generation is improved.

Further, the theme may be directly generated by directly filling the entity information and event type into preset positions of the theme template.

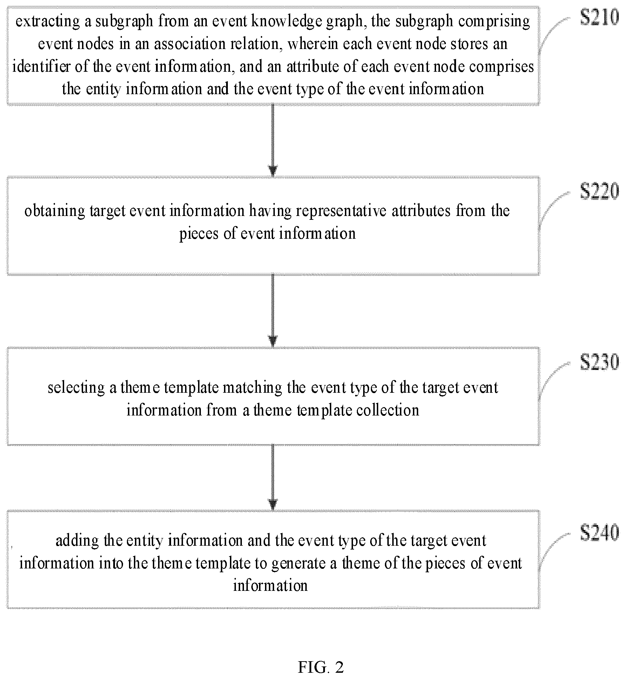

FIG. 2 is a flowchart illustrating a method for generating an event theme according to some embodiments of the present disclosure. Embodiments illustrated as FIG. 2 may include all details described above in embodiments illustrated in FIG. 1.

In some embodiments, obtaining the plurality of pieces of event information in the associated relation, and obtaining the entity information and the event type of each piece of event information may include extracting a subgraph from an event knowledge graph, to improve the efficiency of theme generation. The subgraph includes event nodes in an association relation, and each event node has entity information and an event type.

The method for generating an event theme in FIG. 2 may include the following.

At block S210, a subgraph is extracted from an event knowledge graph. The subgraph includes event nodes in an association relation, each event node stores an identifier of event information, and an attribute of each event node includes entity information and an event type of the event information.

The event knowledge graph includes a plurality of event nodes. The event nodes may be connected by directed edges, the directed edges representing the associated relations between events. The event node stores the identifier of the event information, the identifier being used to identify the event title and the report content. Entity information and event type are used as attributes of the event node.

In some embodiments, not all event nodes included in the event knowledge graph have the associated relation, and those event nodes that do not have the associated relation cannot generate a theme. Therefore, the event nodes being in an associated relation are extracted from the event knowledge graph to generate a common theme. In other words, the event nodes being connected by the directed edges are extracted to generate a common theme.

In some embodiments, the method may further include generating the knowledge graph before the block S210, providing entity information, event types and association relations in advance for generating the theme. In detail, the pieces of event information having an associated relation are obtained. Named entities contained in the event title of each piece of event information identified to obtain the entity information of the event information. Report content of each piece of event information is classified, and the event type of the event information is obtained. An event node is constructed with the event information, the entity information and the event type of the event information and an edge between event nodes is constructed based on the association relation between corresponding event information to generate the event knowledge graph. Identification of the entity information and acquisition of the event types can be seen from the above description, which is not repeated here.

The event node stores the event identifier, and the entity information and event type are stored as attributes of the event node. Further, regular expressions are used to extract event occurrence information from the event title of the event information. Event occurrence information is stored as attributes of the event node.

In some embodiments, a candidate subgraph is extracted from the event knowledge graph. The candidate subgraph includes event nodes in an association relation. The subgraph having a single-chain structure is extracted from the candidate subgraph when the candidate subgraph includes an event node having an outdegree equal to or greater than 2 or an indegree equal to or greater than 2.

In some embodiments, event nodes in an association relation refers to event nodes are connected by edges. The subgraph having a single-chain structure refers to that all event nodes contained in the subgraph form a single chain.

In embodiments, a subgraph is extracted from the event knowledge graph, and then a subgraph is extracted from the above-mentioned subgraph. For convenience of description and distinguishing, the first extracted subgraph is called a candidate subgraph.

Considering that it is possible that the candidate subgraph includes an event node having an outdegree equal to or greater than 2 or an indegree equal to or greater than 2, if these event nodes do not belong to the same topic, then a theme cannot be generated based on those event nodes. Therefore, the subgraph having a single-chain structure is extracted from the candidate subgraph, where each event node contained in the subgraph having a single-chain structure only has the outdegree equal to 1 and the indegree equal to 1 and the subgraph has no branches. In this case, it is ensured that the theme is generated for a plurality of events belonging to the same topic, thereby improving the intelligence of the theme and the user's reading experience.

At block S220, target event information having representative attributes is obtained from the pieces of event information.

At block S230, a theme template matching the event type of the target event information is selected from a theme template collection.

At block S240, the entity information and the event type of the target event information are added into the theme template to generate a theme of the pieces of event information.

In embodiments, the entity information and event type of each piece of event information are pre-stored in the event knowledge graph. By directly extracting structured data from the knowledge graph, the data extraction rate is increased, thereby improving the timeliness of theme generation.

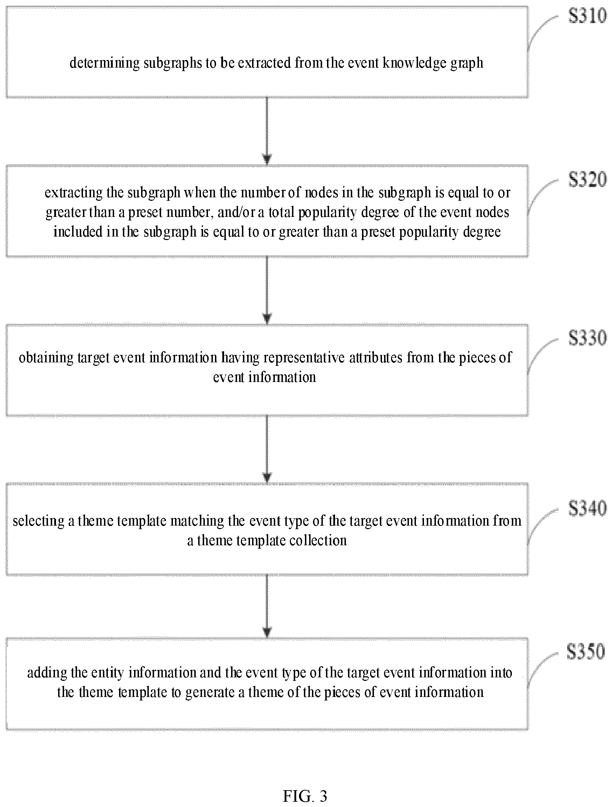

FIG. 3 is a flowchart illustrating a method for generating an event theme according to some embodiments of the present disclosure. Embodiments illustrated as FIG. 3 may include all details of the embodiments illustrated as FIG. 1 or FIG. 2.

In some embodiments, extracting a subgraph from an event knowledge graph may include determining subgraphs to be extracted from the event knowledge graph; and extracting the subgraph when the number of event nodes in the subgraph is equal to or greater than a preset number, and/or a total popularity degree of the event nodes included in the subgraph is equal to or greater than a preset popularity degree. Thus, conditions for extracting the subgraph are provided.

In some embodiments, obtaining target event information having representative attributes from the pieces of event information may include sorting the pieces of event information based on an occurrence time sequence of the pieces of event information; and selecting a first piece or a last piece from sorted event information as the target event information, to obtain the target event information having representative attributes.

The method for generating an event theme in FIG. 3 may include the following.

At block S310, subgraphs to be extracted are determined from the event knowledge graph.

In some embodiments, before extracting the sub-graph, a range is defined for extracting the subgraph. When the subgraph meets the conditions given in block S320, the extraction is performed.

At block S320, the subgraph is extracted when the number of event nodes in the subgraph is equal to or greater than a preset number, and/or a total popularity degree of the event nodes included in the subgraph is equal to or greater than a preset popularity degree.

The preset number and preset popularity degree can be set independently. For example, the preset number may be 10, and the preset popularity degree may be 200.

The total popularity degree of the event nodes included in the subgraph is the sum of the popularity degree of each event node included in the subgraph. The popularity degree of each event node may be determined from the number of times the user triggers the event information identified by the event node within a preset time period. The preset time period may be for example 1 day or 6 hours.

As time goes by, there will be more and more event nodes, and the total popularity degree of the event nodes included in the subgraph may also increase. The subgraph is extracted when the number of event nodes in the subgraph is equal to or greater than the preset number, and/or the total popularity degree of the event nodes included in the subgraph is equal to or greater than the preset popularity degree. As a result, the theme is generated for significant number of event information or the event information having the significant popularity degree.

At block S330, target event information having representative attributes is obtained from the pieces of event information.

The target event information may be selected from the pieces of event information. The pieces of event information may be sorted based on an occurrence time sequence of the pieces of event information, and a first piece or a last piece of the sorted event information may be selected as the target event information.

For example, based on the occurrence time sequence, the pieces of event information are sorted as event information 1, then event information 2, then event information 3, and then event information 4. The first piece (i.e., the event information 1) is the event information that occurs firstly, and the last piece (i.e.e, the event information 4) is the event information that occurs at the latest.

In some embodiments, before sorting the pieces of event information based on the occurrence time sequence of the pieces of event information, the method further includes: calculating a similarity between every two pieces of event information; and removing one of two pieces of event information, when the similarity between the two pieces of event information exceeds a preset similarity threshold.

In detail, a training set including positive samples and negative samples may be constructed, where the positive sample refers to two pieces of similar event information, and the negative sample refers to two pieces of dissimilar event information. The training set may be used to train a neural network model. It is to be noted that the event information herein may be the event title or the first sentence in the report content.

Any two pieces of event information may be input into the neural network model to obtain the similarity between the two pieces of event information. It is determined whether the similarity exceeds the preset similarity threshold, such as 50%. In the case that the similarity between the two pieces of event information exceeds the preset similarity threshold, it may be determined that the two pieces of event information are similar, and any piece of event information may be removed. Any two of the plurality of pieces of event information are input to the neural network model to determine the similarity to remove or delete one of a pair of similar event information, such that the remaining event information are dissimilar to each other. The remaining pieces of dissimilar event information are sorted.

At block S340, a theme template matching the event type of the target event information is selected from a theme template collection.

At block S350, the entity information and the event type of the target event information are added into the theme template to generate a theme of the pieces of event information.

In embodiments, in multiple events, the firstly occurred event may be a cause of other events, and the lastly occurred event may be a final result of other events. Both the firstly occurred event and the lastly occurred event are representative of the multiple events. Thus, the first piece or last piece of event information may be representative of the plurality of pieces of event information.

Further, by removing one of a pair of similar event information, event redundancy may be reduced. Moreover, by removing redundant events and sorting remaining events, the accuracy of the target event information may be improved.

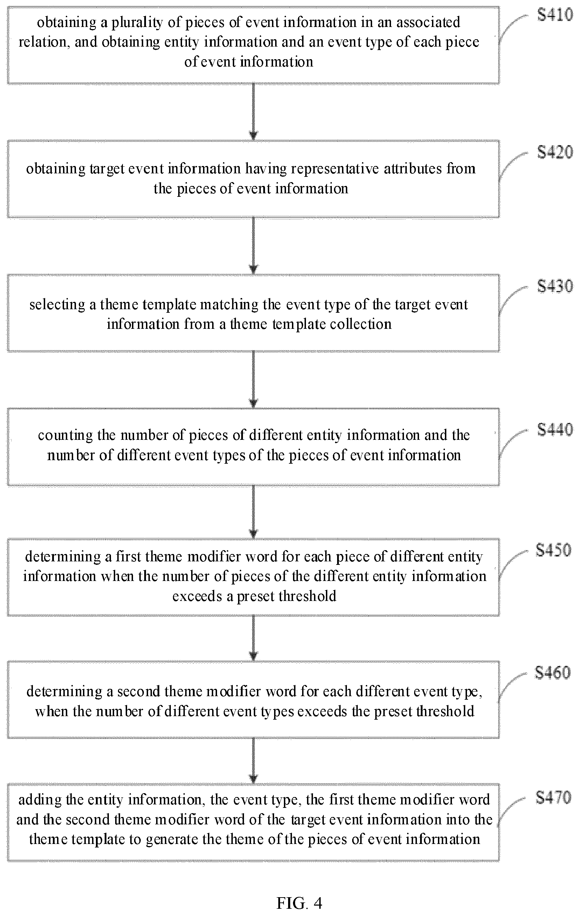

FIG. 4 is a flowchart illustrating a method for generating an event theme according to some embodiments of the present disclosure. Embodiments illustrated in FIG. 4 may include all details of embodiments illustrated in FIG. 1, FIG, 2 and FIG. 3.

In some embodiments, before adding the entity information and the event type of the target event information into the theme template to generate the theme of the pieces of event information, the method may further includes counting the number of pieces of different entity information and the number of different event types of the pieces of event information; determining a first theme modifier word for each piece of different entity information when the number of pieces of the different entity information exceeds a preset threshold; determining a second theme modifier word for each different event type, when the number of different event types exceeds the preset threshold". Moreover, adding the entity information and the event type of the target event information into the theme template to generate the theme of the pieces of event information may include adding the entity information, the event type, the first theme modifier word and the second theme modifier word of the target event information into the theme template to generate the theme of the pieces of event information".

The method for generating an event theme in FIG. 4 may include the following.

At block S410, a plurality of pieces of event information in an associated relation are obtained, and entity information and an event type of each piece of event information are obtained.

At block S420, target event information having representative attributes is selected from the pieces of event information.

At block S430, a theme template matching the event type of the target event information is selected from a theme template collection.

At block S440, the number of pieces of different entity information and the number of different event types of the pieces of event information are counted.

Due to the association relation between the event information, some pieces of event information correspond to the same entity information, but some pieces of event information correspond to different entity information. Similarly, some pieces of event information correspond to the same event type, but some pieces of event information correspond to different event types. Therefore, the number of different pieces of entity information and the number of different event types are counted.

Taking the entity information as an example, the pieces of event information include event information 1, event information 2, event information 3, and event information 4. The event information 1 and the event information 2 both correspond to the same entity information, e.g., Li, the event information 3 corresponds to another entity information, e.g., Zhao, and the event information 4 corresponds to still another entity information, e.g., Wang. By performing statistics, the number of different pieces of entity information is 3.

At block S450, a first theme modifier word for each piece of different entity information is determined when the number of pieces of the different entity information exceeds a preset threshold.

At block S460, a second theme modifier word for each different event type is determined, when the number of different event types exceeds the preset threshold.

The preset threshold may be 2 or 3. If the number of different entity information exceeds the preset threshold, it means that many people participate in multiple events. The theme modifier words corresponding to different entity information may include: multi-party response.

If the number of different event types exceeds the preset number threshold, it means that there are lots of event types. The theme modifier words corresponding to different event types may include: influence and disturbance.

At block S470, the entity information, the event type, the first theme modifier word and the second theme modifier word of the target event information are added into the theme template to generate the theme of the pieces of event information.

In detail, the entity information of the target event information is added into the subject position of the theme template, the event type of the target event information is added into the predicate position of the theme template, and the first and/or second theme modifier words is added at the beginning of the theme template to generate the theme for the multiple events.

For example, after filling the subject position and the predicate position, the theme may be obtained as Zheng and Wang got divorced. In addition, the theme modifier word is disturbance, and the theme for events may be updated as the disturbance that Zheng and Wang got divorced.

It is to be noted that blocks S440-S460 may be executed before the block S470 and after the block S410.

In some embodiment, if the number of different entity information or the number of different event types is relatively large, the target event information is not sufficient to represent all event information. Therefore, filling the theme template with the theme modifier word after filling the entity information and event type in the theme template enriches the theme content and improves the theme's generality over multiple events.

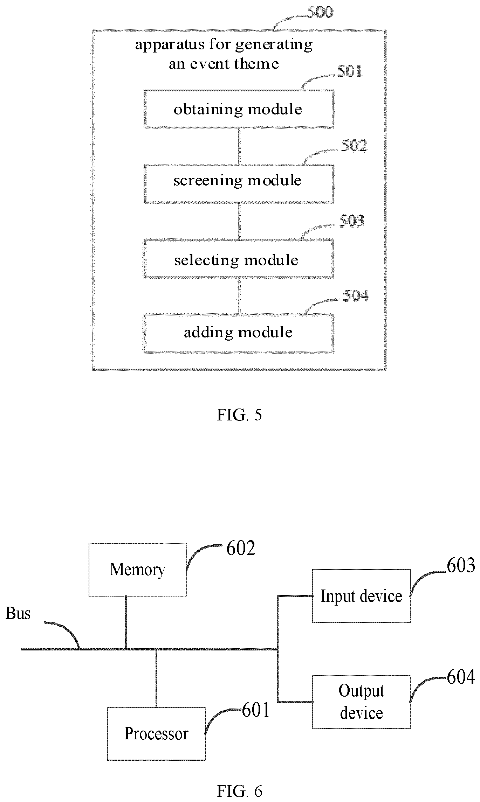

FIG. 5 is a structure diagram of an apparatus for generating an event theme according to some embodiments of the present disclosure. The embodiments of the present disclosure are suitable for searching for synonymous judgment evidence of entry pairs in order to make synonymous judgments based on synonymous judgment evidence. The device is implemented by software and/or hardware, and is specifically configured in an electronic device with certain data computing capabilities.

As illustrated in FIG. 5, the apparatus for generating an event theme 500 includes: an obtaining module 501, a screening module 502, a selecting module 503 and an adding module 504.

The obtaining module 501 is configured to obtain a plurality of pieces of event information in an associated relation, and obtain entity information and an event type of each piece of event information.

The screening module 502 is configured to obtain target event information having representative attributes from the pieces of event information.

The selecting module 503 is configured to select a theme template matching the event type of the target event information from a theme template collection.

The adding module 504 is configured to add the entity information and the event type of the target event information into the theme template to generate a theme of the pieces of event information.

In the embodiments of the present disclosure, the data needed to generate the theme is obtained by obtaining a plurality of pieces of event information in an associated relation, and obtaining entity information and an event type of each piece of event information. The generality of the theme on the plurality of pieces of event information is improved by obtaining target event information having representative attributes from the pieces of event information and generating a theme based on the target event information. One theme template matches one event type, and by adopting different theme templates for different event types, the selected theme is more in line with people's language logic. Through selecting a theme template matching the event type of the target event information from a theme template collection, and adding the entity information and the event type of the target event information into the theme template to generate a theme of the pieces of event information, the efficiency and automation of theme generation is improved.

The obtaining module 501 is configured to extract a subgraph from an event knowledge graph, the subgraph includes event nodes in an association relation, each event node stores an identifier of the event information, and an attribute of each event node comprises the entity information and the event type of the event information.

The obtaining module 501 extracting the subgraph from the event knowledge graph includes: extracting a candidate subgraph from the event knowledge graph, the candidate subgraph including event nodes in an association relation; and extracting the subgraph having a single-chain structure from the candidate subgraph when the candidate subgraph includes an event node having an outdegree equal to or greater than 2 or an indegree equal to or greater than 2.

The obtaining module 501 extracting the subgraph from the event knowledge graph includes: determining subgraphs to be extracted from the event knowledge graph; and extracting the subgraph when the number of nodes in the subgraph is equal to or greater than a preset number, and/or a total popularity degree of the event nodes included in the subgraph is equal to or greater than a preset popularity degree.

The apparatus also includes an atlas generating block configured to: obtain the pieces of event information in the associated relation, each piece of event information including an event title and report content; recognize named entities in the event title of each piece of event information to obtain the entity information of the event information; classify the report content of each piece of event information to obtain the event type of the event information; and construct an event node with the event information, the entity information and the event type of the event information, and construct an edge between event nodes based on the association relation between corresponding event information to generate the event knowledge graph.

The adding module 504 is configured to: add the entity information of the target event information into a subject position of the theme template, and add the event type of the target event information into a predicate position of the theme template to generate the theme of the pieces of event information.

The screening module 502 is configured to: sort the pieces of event information based on an occurrence time sequence of the pieces of event information; and select a first piece or a last piece from pieces of sorted event information as the target event information.

The apparatus further includes a removing module configured to: calculate a similarity between every two pieces of event information; and remove one of two pieces of event information, when the similarity between the two pieces of event information exceeds a preset similarity threshold.

The apparatus further includes a theme modifier word determining module configured to: count the number of pieces of different entity information and the number of different event types of the pieces of event information; determine a first theme modifier word for each piece of different entity information when the number of pieces of the different entity information exceeds a preset threshold; determine a second theme modifier word for each different event type, when the number of different event types exceeds the preset threshold. Correspondingly, the adding module 504 is configured to: add the entity information, the event type, the first theme modifier word and the second theme modifier word of the target event information into the theme template to generate the theme of the pieces of event information.

The above-mentioned apparatus for generating an event theme could implement the method for generating an event theme according to any embodiment of the present disclosure, and has the corresponding functional modules and beneficial effects for implementing the method for generating an event theme.

According to the embodiments of the present disclosure, the disclosure also provides an electronic device and a readable storage medium.

FIG. 6 is a block diagram of an electronic device used to implement the method according to some embodiments of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the obtaining module 510, the screening module 520, the selecting module 530 and the adding module 504 shown in FIG. 5) corresponding to the method in the embodiment of the present disclosure. The processor 601 executes various functional applications and data processing of the server by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Embodiments of the present disclosure further provide a computer program product, containing computer programs when executed on a processor, causing the processor to perform a method for generating an event theme as described above.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

## Claims

1. A method for generating an event theme, comprising:
obtaining (S110) a plurality of pieces of event information in an associated relation, and obtaining entity information and an event type of each piece of event information;
obtaining (S120; S220; S330; S420) target event information having representative attributes from the pieces of event information;
selecting (S130; S230; S340; S430) a theme template matching the event type of the target event information from a theme template collection; and
adding (S140; S240; S350) the entity information and the event type of the target event information into the theme template to generate a theme of the pieces of event information.

2. The method according to claim 1, wherein obtaining (S10) the plurality of pieces of event information in the associated relation, and obtaining the entity information and the event type of each piece of event information comprises:
extracting (S210) a subgraph from an event knowledge graph, the subgraph comprising event nodes in an association relation, wherein each event node stores an identifier of the event information, and an attribute of each event node comprises the entity information and the event type of the event information.

3. The method according to claim 2, wherein extracting (S210) the subgraph from the event knowledge graph comprises:
extracting a candidate subgraph from the event knowledge graph, the candidate subgraph comprising event nodes in an association relation; and
extracting the subgraph having a single-chain structure from the candidate subgraph when the candidate subgraph comprises an event node having an outdegree equal to or greater than 2 or an indegree equal to or greater than 2.

4. The method according to claim 2, wherein extracting (S210) the subgraph from the event knowledge graph comprises:
determining (S310) subgraphs to be extracted from the event knowledge graph; and
extracting (S320) the subgraph when the number of nodes in the subgraph is equal to or greater than a preset number, and/or a total popularity degree of the event nodes included in the subgraph is equal to or greater than a preset popularity degree.

5. The method according to any one of claims 2 to 4, before extracting (S210) the subgraph from the event knowledge graph, the method further comprising:
obtaining (S410) the pieces of event information in the associated relation, each piece of event information comprising an event title and report content;
recognizing named entities in the event title of each piece of event information to obtain the entity information of the event information;
classifying the report content of each piece of event information to obtain the event type of the event information; and
constructing an event node with the event information, the entity information and the event type of the event information, and constructing an edge between event nodes based on the association relation between corresponding event information to generate the event knowledge graph.

6. The method according to any one of claims 1 to 5, wherein adding (S140; S240; S350) the entity information and the event type of the target event information into the theme template to generate the theme of the pieces of event information comprises:
adding the entity information of the target event information into a subject position of the theme template, and adding the event type of the target event information into a predicate position of the theme template to generate the theme of the pieces of event information.

7. The method according to any one of claims 1 to 6, wherein obtaining (S120; S220; S330; S420) the target event information having representative attributes from the pieces of event information comprises:
sorting the pieces of event information based on an occurrence time sequence of the pieces of event information; and
selecting a first piece or a last piece from pieces of sorted event information as the target event information.

8. The method according to claim 7, before sorting the pieces of event information based on the occurrence time sequence of the pieces of event information, the method further comprising:
calculating a similarity between every two pieces of event information; and
removing one of two pieces of event information, when the similarity between the two pieces of event information exceeds a preset similarity threshold.

9. The method according to any one of claims 1 to 8, before adding (S140; S240; S350) the entity information and the event type of the target event information into the theme template to generate the theme of the pieces of event information, the method comprising:
counting (S440) the number of pieces of different entity information and the number of different event types of the pieces of event information;
determining (S450) a first theme modifier word for each piece of different entity information when the number of pieces of the different entity information exceeds a preset threshold;
determining (S460) a second theme modifier word for each different event type, when the number of different event types exceeds the preset threshold; and
wherein adding (S140; S240; S350) the entity information and the event type of the target event information into the theme template to generate the theme of the pieces of event information comprises:
adding (S470) the entity information, the event type, the first theme modifier word and the second theme modifier word of the target event information into the theme template to generate the theme of the pieces of event information.

10. An apparatus (500) for generating an event theme, comprising:
an obtaining module (501), configured to obtain a plurality of pieces of event information in an associated relation, and obtain entity information and an event type of each piece of event information;
a screening module (502), configured to obtain target event information having representative attributes from the pieces of event information;
a selecting module (503), configured to select a theme template matching the event type of the target event information from a theme template collection; and
an adding module (504), configured to add the entity information and the event type of the target event information into the theme template to generate a theme of the pieces of event information.

11. An electronic device, comprising:
at least one processor (601); and
a memory (602) communicatively connected with the at least one processor (601); wherein,
the memory (602) stores instructions executable by the at least one processor (601), and when the instructions are executed by the at least one processor (601), the at least one processor (601) is caused to implement a method for generating an event theme according to any one of claims 1 to 9.

12. A non-transitory computer-readable storage medium having computer instructions stored thereon, wherein the computer instructions are used to cause the computer to implement a method for generating an event theme according to any one of claims 1 to 9.

13. A computer program product, containing computer programs when executed on a processor, causing the processor to perform a method for generating an event theme according to any one of claims 1 to 9.
